# FASCICULE DE BREVET EUROPEEN

(11) **EP 3 200 967 B1**
(45) Date de publication et mention de la délivrance du brevet: **15.08.2018**
(21) Numéro de dépôt: 15763890.9
(22) Date de dépôt: 11.09.2015
(51) Int. Cl.: B29C 49/24, B29C 49/42, B29C 49/04, B29C 49/32, B29L 31/00, B29K 105/00, B29K 101/12

(54) **PROCÉDÉ D'EXTRUSION-SOUFFLAGE ET ROBOT DÉDIÉ**
EXTRUSIONSBLASFORMVERFAHREN UND ZUGEHÖRIGER ROBOTER
EXTRUSION-BLOW-MOULDING METHOD AND DEDICATED ROBOT

(30) Priorité: 29.09.2014 FR 1459193
(43) Date de publication de la demande: 09.08.2017
(73) Titulaire: Machines Pages, 39460 Foncine Le Haut (FR)
(72) Inventeur: OLICHON, Philippe, F-39460 Foncine Le Haut (FR)
(74) Mandataire: Novagraaf Technologies
(86) Numéro de dépôt international: PCT/EP2015/070900
(87) Numéro de publication internationale: WO 2016/050484

(56) Documents cités:
- DE-U1- 20 000 188
- US-A1- 2007 176 330
- US-B1- 6 499 988

## Description

### Domaine technique

La présente invention un procédé d'extrusion soufflage pour la fabrication d'objet soufflé intégrant au moins une étiquette intégrée in-situ. Elle concerne également un robot mettant en oeuvre ledit procédé. Les documents US2007/176330A1, US6499988B1 et DE20000188U1 sont représentatifs de l'art antérieur dans le domaine technique de la demande.

### Etat de la technique

Le procédé d'extrusion soufflage est connu depuis longtemps pour la fabrication d'objet creux tels que des contenants, des flacons des bidons ou des bouteilles en matière thermoplastique. Le procédé est fondé sur l'extrusion par une tête d'extrusion d'une paraison 3 ayant une forme tubulaire qui est ensuite coupée, placée dans un moule et soufflée pour prendre la forme d'empreinte du moule.

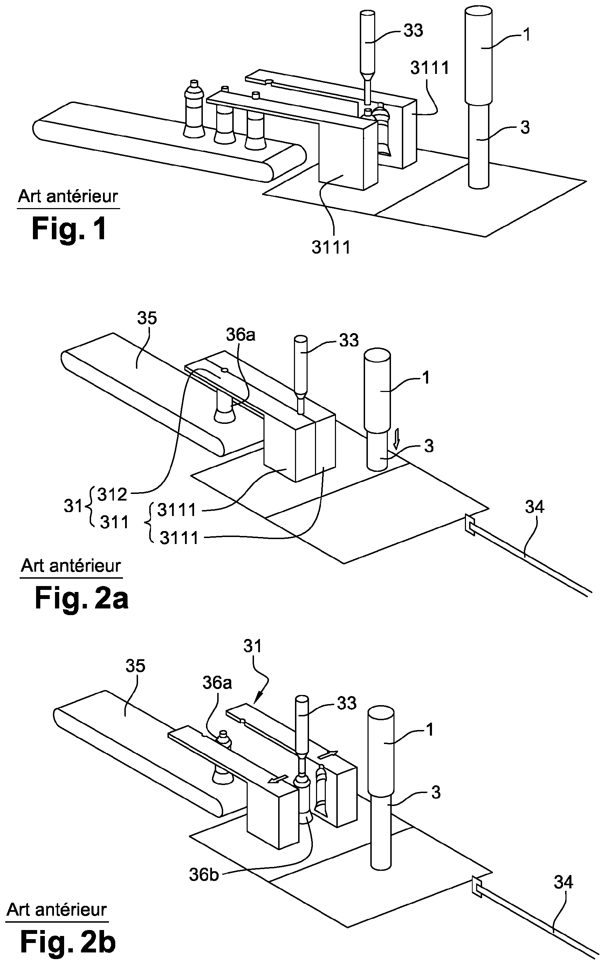

En se référant à la figure 1, une machine d'extrusion soufflage classique comporte une extrudeuse qui prépare de la matière initialement sous forme de granulés en pâte de matière thermoplastique sous pression et une tête 1 d'extrusion qui assure le transfert de la matière en fusion de l'extrudeuse vers une filière qui règle la forme et l'épaisseur de la paraison 3.

Un robot est disposé à côté de l'extrudeuse pour manoeuvrer un moule 311 et évacuer les objets soufflés. Des canaux de refroidissement dans lesquels circule un fluide caloporteur servent à évacuer la chaleur de la matière thermoplastique pour solidifier la pièce dans le moule 311. Le robot comporte une pince 31 comportant le moule 311 pour fermer le moule autour de la paraison 3 extrudée par la tête 1 d'extrusion dans une direction d'extrusion, en général verticale. Le moule 311 comporte deux coquilles 3111 avec les empreintes 3112, les coquilles étant mobiles selon une direction de pincement perpendiculaire à la direction d'extrusion. La pince 31 comporte en outre des moyens de préhension 312 pour reprendre un premier objet soufflé 36a retenu par une canne de soufflage 33. Des moyens de transfert permettent de transférer la pince 31 dans une direction de transfert perpendiculaire par rapport à la direction d'extrusion et à la direction de pincement. La canne de soufflage 33 est montée coulissante dans la direction d'extrusion, décalée du pas réalisé par les moyens de transfert, pour s'insérer sur une extrémité de la paraison 3 pour la souffler dans le moule 311 et former un deuxième objet soufflé 36b. Un système d'évacuation 35 est disposé dans la direction de transfert pour recevoir le premier objet soufflé 36a. La canne de soufflage 33 est également apte à retenir le deuxième objet 36b lors de l'ouverture du moule 311.

Dans certaines versions, des moyens d'insertion 34 sont disposés à l'opposé de la pince 31 par rapport à l'axe d'extrusion pour insérer au moins une feuille à la surface d'au moins l'une des empreintes. Lors de l'étape de soufflage, la feuille est plaquée entre la paroi du moule et la paroi de l'objet soufflé et s'intègre alors par fusion au moins partielle à la paroi de l'objet soufflé. Ceci permet de couvrir la surface extérieure de l'objet soufflé avec par exemple une étiquette. La feuille est de préférence dans une matière thermoplastique afin de faciliter le recyclage de l'objet soufflé. De plus l'étiquette est fortement liée à la paroi de l'objet soufflé, ce qui lui confère une grande qualité de tenue.

Les objets soufflés sont fabriqués par une telle installation par une succession de cycles dont un seul est décrit ci-après, les autres étant identiques. La première étape du cycle est choisie de manière arbitraire. La description qui suit fait référence à un premier et un deuxième objet soufflé 36a, 36b qui sont des objets qui se suivent dans le cycle de fabrication.

Dans une position initiale, représentée sur la figure 2a, la paraison 3 est en cours d'extrusion. Le moule 311 est fermé et la pince 31 est dégagée de la tête 1 d'extrusion. La canne de soufflage 33 est engagée dans le moule 31 qui contient le deuxième objet soufflé 36b. Les moyens de préhension 312 maintiennent par un col le premier objet soufflé 36a au-dessus du système d'évacuation.

A la première étape, montrée sur la figure 2b, la pince 31 s'ouvre de telle sorte que le deuxième objet 36b est libéré du moule 311. Les moyens de préhension 312 lâchent le premier objet qui est ainsi transféré sur le système d'évacuation 35, par exemple un convoyeur à tapis roulant.

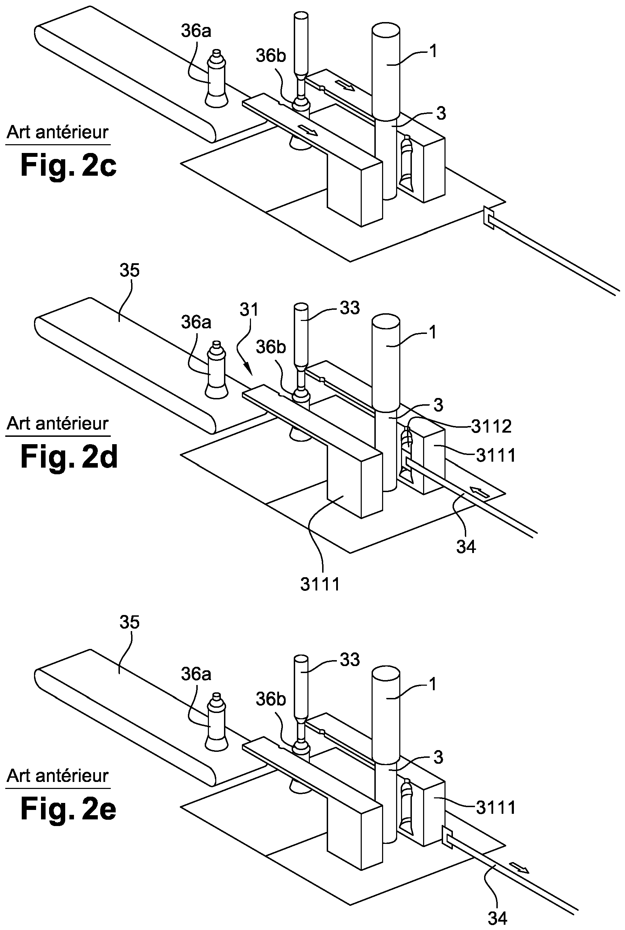

A la deuxième étape, montrée sur la figure 2c, les moyens de transfert déplacent la pince 31 pour placer le moule 311 autour de la paraison 3.

A la troisième étape, montrée sur la figure 2d, les moyens d'insertion 34, sous la forme de bras coulissants, introduisent deux feuilles pour les placer respectivement dans les empreintes des deux coquilles du moule 311, et les déposent.

A la quatrième étape, montrée sur la figure 2e, les moyens d'insertion 34 se retirent.

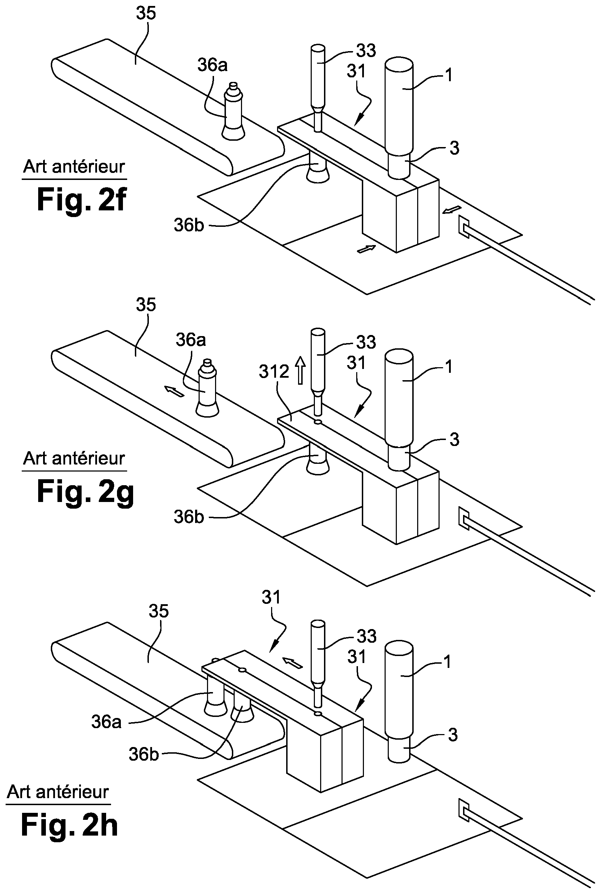

A la cinquième étape, montrée sur la figure 2f, la pince 31 se referme de manière à insérer la paraison 3 dans le moule. La partie de la paraison 3 dans le moule est sectionnée pour la détacher de la paraison 3 en cours d'extrusion. Dans le même mouvement les moyens de préhension 312 saisissent le deuxième objet 36b soufflé par le col, à proximité de la liaison avec la canne de soufflage 33.

A la sixième étape, montrée sur la figure 2g, la canne de soufflage 33 se déplace vers le haut pour se dégager du deuxième objet 36b soufflé, maintenu par les moyens de préhension 312.

A la septième étape, montrée sur la figure 2h, les moyens de transfert déplacent la pince 31 avec le deuxième objet 36b pour que la canne de soufflage 33 soit en regard du moule 311. A ce moment, le deuxième objet 36b soufflé est au-dessus du système d'évacuation 35.

A la huitième étape, la canne de soufflage 33 descend et souffle de l'air dans la paraison 3 pour plaquer les parois de la paraison 3 dans les empreintes des coquilles. Un troisième objet est ainsi formé, portant à sa surface les feuilles qui ont été insérées dans le moule 311.

La position atteinte est celle de la position initiale, hormis que le deuxième objet 36b a remplacé le premier dans les moyens de préhension 312. Le cycle reprend alors à la première étape.

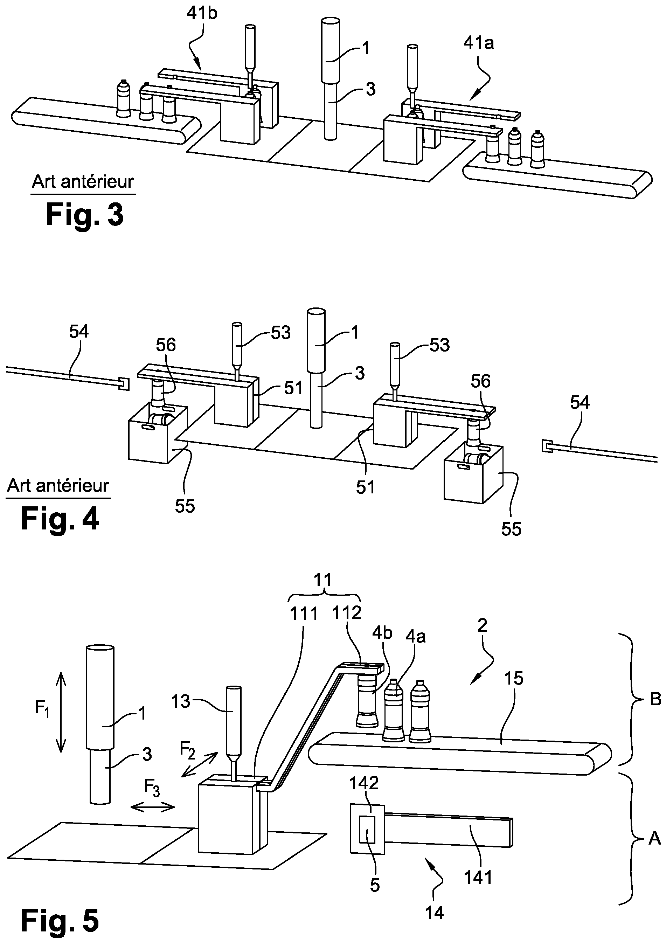

Dans certaines installations, on souhaite utiliser deux postes de soufflage, afin d'avoir une plus grande productivité, comme montré sur la figure 3. L'installation comporte alors un robot formé de deux robots tels que décrits précédemment placés de part et d'autre de l'extrudeuse, hormis les moyens d'insertion. En effet, la deuxième pince 41b prend la place des moyens d'insertion du premier ensemble et inversement. Dans cette configuration, il n'est pas possible d'avoir l'insertion de feuilles dans les moules. Les paraisons 3 produites sont prises alternativement par l'une ou l'autre des pinces 41a, 41b.

On a proposé une installation permettant tout de même d'avoir l'insertion de feuilles, comme montré sur la figure 4. Dans cette configuration, les moyens d'évacuation sont remplacés par un réceptacle 55 pour recevoir les objets soufflés qui tombent par pesanteur après l'ouverture de la pince 51. L'espace libéré par le système d'évacuation est utilisé par les moyens d'insertion 54 pour insérer des feuilles non pas lorsque la pince 51 est autour de la paraison 3 mais lorsqu'elle est encore autour de l'objet soufflé 56 maintenu par la canne de soufflage 53.

Les configurations actuelles posent certains problèmes. L'insertion des feuilles se fait alors que la paraison 3 est entre les coquilles du moule dans le cas de la machine simple, ou lorsque l'objet soufflé est entre les coquilles dans le cas de la machine double. Ceci limite l'espace disponible pour le passage des bras qui portent les feuilles, ou oblige à prévoir une grande course d'ouverture pour les moules. Dans le premier cas, les bras peuvent manquer de rigidité et donc de précision dans le placement. Dans le second cas, il est nécessaire de prévoir des organes de coulissement pour l'ouverture des pinces de plus grandes dimensions et donc plus chers, plus lourds et nécessitant des temps de manoeuvre plus longs. Ce problème est encore plus marqué dans le cas des installations doubles, puisque l'objet soufflé est de plus grande dimensions que la paraison 3.

Un autre problème avec les machines doubles avec insertion de feuille est que le fait de lâcher les objets soufflés nécessite de prévoir des opérations spécifiques pour les ranger, alors que le système d'évacuation, par exemple par convoyeur à tapis, permet de les manutentionner plus facilement. Avec ces installations, il faut également prévoir que les bras de pose des feuilles se retirent au-delà de la position de l'objet soufflé maintenu par les moyens de préhension pour ne pas gêner l'évacuation. Ceci oblige à réaliser des bras très longs qui manquent souvent de rigidité et de précision pour la pose des inserts. De ce fait également, l'installation est très encombrante.

L'invention vise à fournir un procédé et un robot d'extrusion soufflage limitant l'encombrement, conservant une bonne rigidité des moyens d'insertion et permettant l'utilisation d'un système d'évacuation.

### Description de l'invention

Avec ces objectifs en vue, l'invention a pour objet un procédé d'extrusion-soufflage selon lequel :
- on extrude au moins une paraison dans une direction d'extrusion,
- on ferme une première pince comportant un premier moule autour de la paraison selon une première direction de pincement perpendiculaire à la direction d'extrusion, au moins une empreinte du premier moule contenant au moins une feuille, et on reprend par la première pince au moins un premier objet soufflé retenu par au moins une première canne de soufflage,
- on transfère la première pince dans une première direction de transfert oblique par rapport à la direction d'extrusion et perpendiculaire à la première direction de pincement le long d'un premier niveau,
- on insère la première canne de soufflage sur une extrémité de la paraison pour la souffler dans le premier moule et former au moins un deuxième objet soufflé, la feuille étant intégrée au deuxième objet soufflé,
- on ouvre le premier moule dans la première direction de pincement et retenant le deuxième objet sur la première canne de soufflage et on libère le premier objet soufflé sur un premier système d'évacuation,
le procédé étant caractérisé en ce que, pendant l'étape d'extrusion de la paraison, lorsque le premier moule est ouvert, on transfère par la première canne de soufflage le premier objet soufflé du premier niveau vers un deuxième niveau décalé par rapport au premier dans la direction d'extrusion, on place la feuille dans l'empreinte du premier moule par des premiers moyens d'insertion, puis on transfère la première pince dans la première direction de transfert pour placer le premier moule autour de la paraison, et en ce que la première pince reprend le premier objet soufflé au deuxième niveau lors de l'étape de fermeture de la première pince pour le transférer sur le premier système d'évacuation.

Le placement de la feuille dans le moule est réalisé non pas lorsque le moule est autour de la paraison, mais avant le transfert du moule à cette place alors que le deuxième objet soufflé est extrait vers le deuxième niveau. L'espace entre les coquilles du moule est alors complètement libre. Il est ainsi possible d'utiliser des moyens d'insertion moins contraints par l'espace libre, ce qui permet de gagner en précision de placement de la ou des feuilles dans le moule sans augmenter la course d'ouverture du moule. De plus le système d'évacuation placé au deuxième niveau est au-dessus des moyens d'insertion, ce qui limite l'emprise au sol de l'installation. La tête d'extrusion peut réaliser une paraison ou plusieurs, auquel cas le moule comporte autant de cavités que de paraisons pour former autant d'objets. La canne de soufflage est également dupliquée ou subdivisée afin de souffler dans chaque paraison et de reprendre autant d'objets.

Selon un deuxième mode de réalisation du procédé :
- dans un deuxième moule ouvert, manoeuvré par une deuxième pince, on transfère par au moins une deuxième canne de soufflage au moins un troisième objet soufflé du premier niveau vers le deuxième niveau,
- on place au moins une deuxième feuille dans au moins une empreinte du deuxième moule par des deuxièmes moyens d'insertion,
- on transfère la deuxième pince dans la deuxième direction de transfert pour placer le deuxième moule autour de la paraison lorsque la première pince est retirée, et
- on ferme le deuxième moule autour de la paraison selon une deuxième direction de pincement perpendiculaire à la direction d'extrusion, et on reprend par la deuxième pince le troisième objet soufflé retenu par la deuxième canne de soufflage au deuxième niveau,
- on transfère la deuxième pince dans une deuxième direction de transfert oblique par rapport à la direction d'extrusion et perpendiculaire à la deuxième direction de pincement,
- on insère la deuxième canne de soufflage sur une extrémité de la paraison pour la souffler dans le deuxième moule et former au moins un quatrième objet soufflé, la feuille étant intégrée au quatrième objet soufflé,
- on ouvre le deuxième moule dans la deuxième direction de pincement en retenant le quatrième objet soufflé sur la deuxième canne de soufflage et on libère le troisième objet soufflé sur un deuxième système d'évacuation.

Ce procédé utilise deux postes de soufflage. Il permet de réaliser l'installation avec un faible encombrement puisque les deux systèmes d'évacuation sont superposés aux moyens d'insertion. De plus, comme précédemment, l'insertion des feuilles est réalisée sans la présence ni de la paraison ni de celle de l'objet soufflé. En outre les moyens d'insertion peuvent être à proximité immédiate du moule ce qui diminue la longueur des bras coulissants pour les moyens d'insertion. Ces deux caractéristiques combinées augmentent considérablement la rigidité des moyens d'insertion et donc la précision de positionnement des feuilles en rendant une telle installation beaucoup plus fiable. On constate par ailleurs qu'il est ainsi possible d'utiliser conjointement des moyens d'insertion avec un système d'évacuation tel qu'un tapis roulant, alors que selon l'art antérieur on ne connaissait que l'évacuation des objets soufflés par pesanteur lorsqu'on utilisait des moyens d'insertion.

Selon d'autres caractéristiques :
- la première ou la deuxième direction de transfert est perpendiculaire à la direction d'extrusion.
- la première et la deuxième direction de transfert sont parallèles.
- on sectionne transversalement la paraison lors de la fermeture du moule. Le sectionnement peut être réalisé par un outillage intégré au moule ou à l'extrudeuse.

L'invention a aussi pour objet un robot pour machine d'extrusion-soufflage comportant :
- une première pince comportant un premier moule pour fermer le premier moule autour d'au moins une paraison extrudée par une tête d'extrusion dans une direction d'extrusion, le premier moule comportant des coquilles avec des empreintes, les coquilles étant mobiles selon une première direction de pincement perpendiculaire à la direction d'extrusion, la première pince comportant en outre des premiers moyens de préhension pour reprendre au moins un premier objet soufflé retenu par au moins une première canne de soufflage,
- des premiers moyens d'insertion pour insérer au moins une feuille à la surface d'au moins l'une des empreintes,
- des premiers moyens de transfert pour transférer la première pince dans une première direction de transfert oblique par rapport à la direction d'extrusion et perpendiculaire à la première direction de pincement le long d'un premier niveau,
- la première canne de soufflage étant apte à être insérée sur une extrémité de la paraison pour la souffler dans le premier moule et former au moins un deuxième objet soufflé, la feuille étant intégrée au deuxième objet soufflé, et apte à retenir le deuxième objet sur la première canne de soufflage lors de l'ouverture du premier moule par la première pince,
- un premier système d'évacuation disposé pour recevoir le premier objet soufflé par les premiers moyens de préhension lors de l'ouverture de la première pince,
le robot étant caractérisé en ce que la première canne de soufflage est agencée pour transférer le premier objet soufflé du premier niveau vers un deuxième niveau décalé par rapport au premier dans la direction d'extrusion de manière à sortir le premier objet du premier moule, en ce que les premiers moyens d'insertion sont agencés pour insérer la feuille en regard de la première canne de soufflage, en ce que les premiers moyens de préhension sont agencés pour reprendre le premier objet soufflé au deuxième niveau lors de la fermeture de la première pince pour le transférer sur le premier système d'évacuation, et en ce que le robot est piloté pour mettre en oeuvre le procédé tel que décrit précédemment.

Selon un deuxième mode de réalisation, le robot comporte en outre :
- une deuxième pince comportant un deuxième moule pour fermer le deuxième moule autour de la paraison selon une deuxième direction de pincement perpendiculaire à la direction d'extrusion, le deuxième moule comportant des coquilles avec des empreintes, et des deuxièmes moyens de préhension pour reprendre au moins un troisième objet soufflé retenu par au moins une deuxième canne de soufflage,
- des deuxièmes moyens d'insertion pour insérer au moins une feuille à la surface d'au moins l'une des empreintes du deuxième moule,
- des deuxièmes moyens de transfert pour transférer la deuxième pince dans une deuxième direction de transfert oblique par rapport à la direction d'extrusion, ou perpendiculaire, et perpendiculaire à la deuxième direction de pincement le long du premier niveau,
- la deuxième canne de soufflage étant apte à être insérée sur une extrémité de la paraison pour la souffler dans le deuxième moule et former au moins un quatrième objet soufflé, la feuille étant intégrée au quatrième objet soufflé, la deuxième canne de soufflage étant apte à retenir le quatrième objet sur la deuxième canne de soufflage lors de l'ouverture du deuxième moule par la deuxième pince, et agencée pour transférer le quatrième objet soufflé du premier niveau vers le deuxième niveau,
- un deuxième système d'évacuation disposé pour recevoir le troisième objet soufflé par les deuxièmes moyens de préhension lors de l'ouverture de la deuxième pince,
les deuxièmes moyens de préhension étant agencés pour reprendre le troisième objet soufflé au deuxième niveau lors de la fermeture de la deuxième pince pour le transférer sur le deuxième système d'évacuation, le robot étant piloté pour mettre en oeuvre le procédé selon le deuxième mode de réalisation.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue schématique d'une installation d'extrusion soufflage selon l'art antérieur à un poste avec des moyens d'insertion de feuilles ;
- les figures 2a à 2h montrent les étapes d'un procédé mise en oeuvre par l'installation de la figure 1 ;
- la figure 3 montre une autre installation selon l'art antérieur, avec deux postes de soufflage ;
- la figure 4 montre une autre installation selon l'art antérieur, avec deux postes de soufflage et des moyens d'insertion de feuilles ;
- la figure 5 est une vue schématique d'une installation d'extrusion soufflage à un poste avec des moyens d'insertion de feuilles selon un premier mode de réalisation de l'invention ;
- les figures 6a à 6i montrent les étapes d'un procédé mise en oeuvre par l'installation de la figure 5 ;
- la figure 7 est une vue schématique d'une installation d'extrusion soufflage à deux postes avec des moyens d'insertion de feuilles selon un deuxième mode de réalisation de l'invention.

### DESCRIPTION DETAILLEE

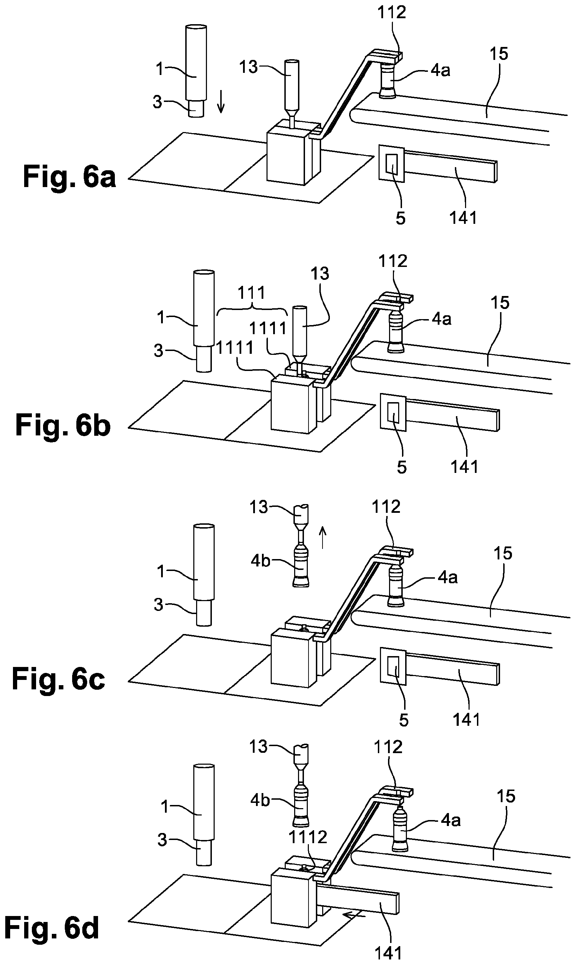

En référence aux figures 5 et 6a à 6i, une installation d'extrusion-soufflage comporte une extrudeuse dont seule une tête 1 est représentée sur les figures et un robot 2 selon un premier mode de réalisation de l'invention. La tête 1 d'extrusion produit en continu une paraison 3 de forme tubulaire dans une direction d'extrusion F1, en l'occurrence verticalement et vers le bas. Le robot 2 comporte une première pince 11 comportant un premier moule 111 pour fermer le premier moule 111 autour de la paraison 3. Le premier moule 111 comporte des coquilles 1111 avec des empreintes 1112. Les coquilles 1111 sont mobiles selon une première direction de pincement F2 perpendiculaire à la direction d'extrusion F1, c'est-à-dire horizontalement.

Le robot 2 comporte en outre des premiers moyens de transfert, non représenté, pour transférer la première pince 11 dans une première direction de transfert F3 entre la tête 1 d'extrusion et un premier poste de soufflage le long d'un premier niveau A. La première direction de transfert F3 peut être par exemple oblique par rapport à la direction d'extrusion F1 et perpendiculaire à la première direction de pincement F2. En l'occurrence, la première direction de transfert F3 est perpendiculaire à la direction d'extrusion F1, et donc horizontale.

La première pince 11 comporte en outre des premiers moyens de préhension 112 pour reprendre un premier objet soufflé 4a et le transférer, d'une manière détaillée ci-après.

Le robot 2 comporte au poste de soufflage une première canne de soufflage 13 montée coulissante dans la direction d'extrusion F1. La première canne de soufflage 13 est apte à être insérée, dans une position de soufflage, sur une extrémité de la paraison 3 au premier poste de soufflage pour la souffler dans le premier moule 111 et former un deuxième objet soufflé 4b. La première canne de soufflage 13 est en outre apte à maintenir le deuxième objet soufflé 4b pour l'emmener à un deuxième niveau B supérieur au premier niveau A de manière à sortir le deuxième objet soufflé 4b du premier moule 111.

Le robot 2 comporte en outre des premiers moyens d'insertion 14 pour insérer une feuille 5 à la surface de chacune des empreintes 1112 lorsque le premier moule 111 est au poste de soufflage, en position ouverte. Les premiers moyens d'insertion 14 comporte deux bras 141 montés coulissants, chaque bras 141 se terminant par un dispositif de préhension 142 apte à supporter et transporter l'une des feuilles 5 pour la présenter en regard de la coquille 1111 correspondante. Le bras 141 ou le dispositif de préhension 142 est en outre apte à se déplacer dans la direction de pincement pour déposer et transférer la feuille 5 sur la coquille 1111 dans l'empreinte 1112, d'une manière connue en soi. Dans le cas de la dépose de feuille uniquement dans l'une des coquilles, on peut n'utiliser qu'un bras.

Le robot 2 comporte également un premier système d'évacuation 15 disposé pour recevoir le premier objet soufflé 4a par les premiers moyens de préhension 112 lors de l'ouverture de la première pince 11.

Le robot 2 est piloté, par exemple par un automate programmable non représenté, pour mettre en oeuvre le procédé qui va être décrit maintenant.

Dans une position initiale, représentée sur la figure 6a, la paraison 3 est en cours d'extrusion. Le premier moule 111 est fermé et la première pince 11 est au poste de soufflage. La première canne de soufflage 13 est engagée dans le premier moule 111 qui contient le deuxième objet soufflé 4b. Les premiers moyens de préhension 112 maintiennent par un col le premier objet soufflé 4a au-dessus du premier système d'évacuation 15.

A la première étape, montrée sur la figure 6b, la première pince 11 s'ouvre de telle sorte que le deuxième objet soufflé 4b est libéré du premier moule 111 en étant maintenu à l'extrémité de la deuxième canne de soufflage. Les premiers moyens de préhension 112 lâchent le premier objet soufflé 4a qui est ainsi transféré sur le premier système d'évacuation 15.

A la deuxième étape, montrée sur la figure 6c, la première canne de soufflage 13 transfère le deuxième objet du premier niveau A vers le deuxième niveau B.

A la troisième étape, montrée sur la figure 6d, les premiers moyens d'insertion 14, introduisent deux feuilles pour les placer respectivement dans les empreintes 1112 des deux coquilles 1111 du premier moule 111, et les déposent.

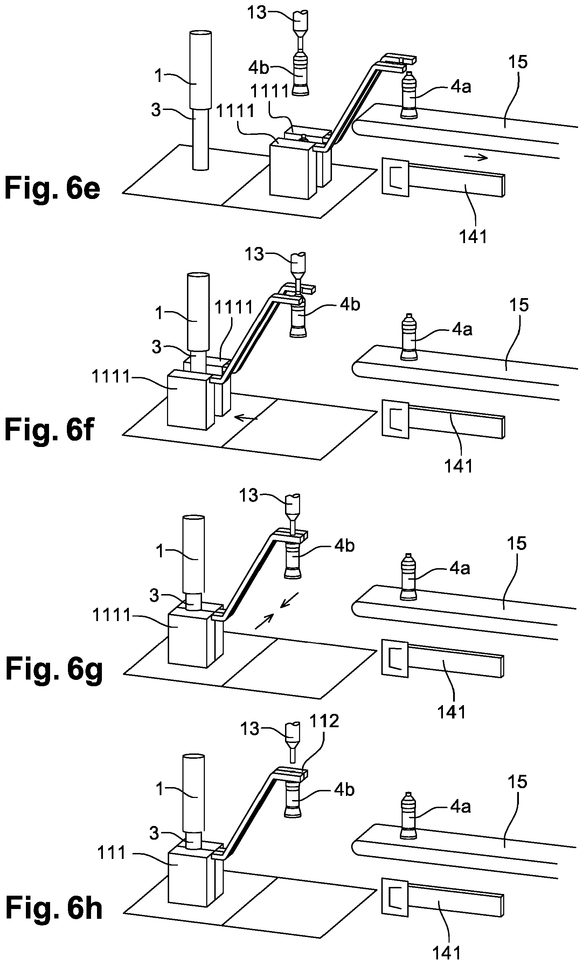

A la quatrième étape, montrée sur la figure 6e, les premiers moyens d'insertion 14 se retirent.

A la cinquième étape, montrée sur la figure 6f, les moyens de transfert déplacent la première pince 11 pour placer le premier moule 111 autour de la paraison 3, alors que les feuilles sont maintenues dans les coquilles 1111.

A la sixième étape, montrée sur la figure 6g, la première pince 11 se referme de manière à insérer la paraison 3 dans le premier moule 111. Dans le même mouvement les premiers moyens de préhension 112 saisissent le deuxième objet soufflé 4b par le col, à proximité de la liaison avec la première canne de soufflage 13.

A la septième étape, montrée sur la figure 6h, la première canne de soufflage 13 se déplace vers le haut pour se dégager du deuxième objet soufflé 4b, maintenu par les premiers moyens de préhension 112.

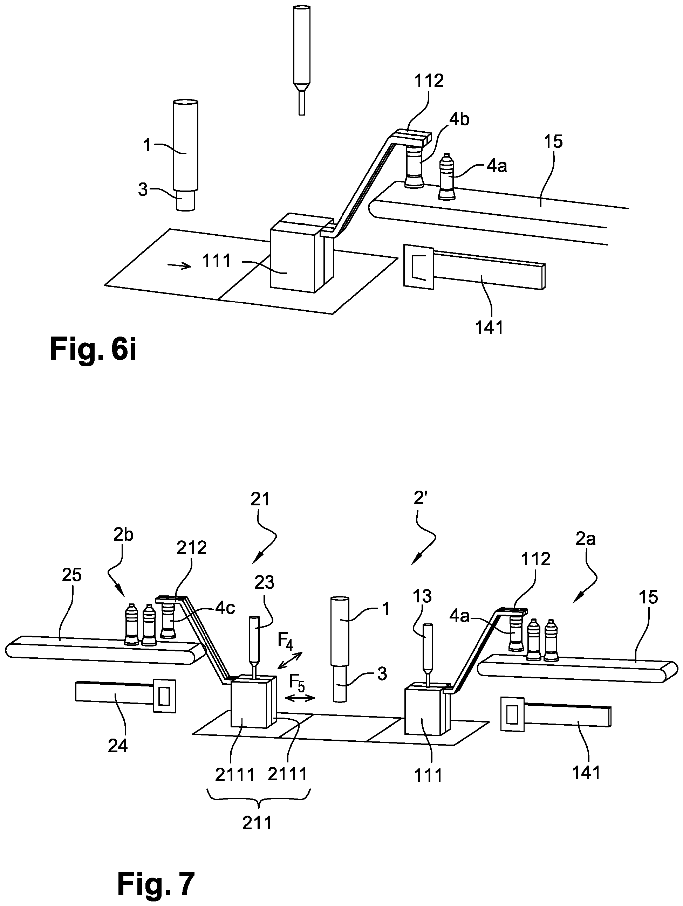

A la huitième étape, montrée sur la figure 6i, les moyens de transfert déplacent la première pince 11 avec le deuxième objet pour que la première canne de soufflage 13 soit en regard du premier moule 111. A ce moment, le deuxième objet soufflé 4b est au-dessus du premier système d'évacuation 15.

A la neuvième étape, la première canne de soufflage 13 descend et souffle de l'air dans la paraison 3 pour plaquer les parois de la paraison 3 dans les empreintes 1112 des coquilles 1111. Un troisième objet est ainsi formé, portant à sa surface les feuilles qui ont été insérées dans le premier moule 111. La position atteinte est celle de la position initiale, hormis que le deuxième objet a remplacé le premier dans les premiers moyens de préhension 112. Le cycle reprend alors à la première étape.

Une autre installation est montrée sur la figure 7 et comporte un robot 2' selon un deuxième mode de réalisation de l'invention. Dans cette installation le robot 2a selon le premier mode de réalisation est complété par un deuxième poste 2b identique ou symétrique placé en regard du premier poste 2a. Ce deuxième poste 2b comporte, de manière similaire, une deuxième pince 21 comportant un deuxième moule 211 pour fermer le deuxième moule 211 autour de la paraison 3. Le deuxième moule 211 comporte des coquilles 2111. Les coquilles 2111 sont mobiles selon une deuxième direction de pincement F4 perpendiculaire à la direction d'extrusion F1, c'est-à-dire horizontalement.

Le robot 2' comporte en outre des deuxièmes moyens de transfert, non représentés, pour transférer la deuxième pince 21 dans une deuxième direction de transfert F5 parallèle à la première direction de transfert F3 entre la tête 1 d'extrusion et un deuxième poste de soufflage le long du premier niveau A.

Le robot 2' comporte au poste de soufflage une deuxième canne de soufflage 23 montée coulissante dans la direction d'extrusion F1. La deuxième canne de soufflage 23 est apte à être insérée, dans une position de soufflage, sur une extrémité de la paraison 3 au poste de soufflage pour la souffler dans le deuxième moule 211 et former un quatrième objet soufflé. La deuxième canne de soufflage 23 est en outre apte à maintenir l'objet soufflé pour l'emmener à un deuxième niveau B supérieur au premier niveau A de manière à sortir le quatrième objet soufflé du deuxième moule 211.

La deuxième pince 21 comporte en outre des deuxièmes moyens de préhension 212 pour reprendre un troisième objet soufflé 4c retenu par la deuxième canne de soufflage 23 au deuxième niveau B.

Le robot 2' comporte en outre des deuxièmes moyens d'insertion 24 pour insérer une feuille à la surface de chacune des empreintes 222 lorsque le deuxième moule 211 est au deuxième poste de soufflage, en position ouverte. Les deuxièmes moyens d'insertion 24 sont similaires aux premiers moyens d'insertion 14.

Le robot 2' comporte également un deuxième système d'évacuation 25 disposé pour recevoir le troisième objet soufflé 4c par les deuxièmes moyens de préhension 212 lors de l'ouverture de la deuxième pince 21,

Le deuxième poste fonctionne comme le premier poste, mais en décalage, c'est-à-dire que la fermeture du deuxième moule 211 sur la paraison 3 est réalisée pendant le soufflage d'un objet dans le premier moule 111, et inversement. Le fonctionnement ne sera donc pas décrit plus en détail.

L'invention n'est pas limitée aux modes de réalisation qui viennent d'être décrits à titre d'exemple. La première et la deuxième direction de transfert F3, F5 ne sont pas nécessairement parallèles mais peuvent être décalées angulairement, vues dans un plan horizontal. De plus, elles ne sont pas nécessairement horizontales et peuvent être orientées en descente ou en montée vers le poste de soufflage. D'autres perfectionnements courants dans la technique d'extrusion-soufflage pourront aussi être adoptés.

## Revendications

1. Procédé d'extrusion-soufflage selon lequel :
- on extrude au moins une paraison (3) dans une direction d'extrusion (F1),
- on ferme une première pince (11) comportant un premier moule (111) autour de la paraison (3) selon une première direction de pincement (F2) perpendiculaire à la direction d'extrusion (F1), au moins une empreinte du premier moule (111) contenant au moins une feuille (5), et on reprend par la première pince (11) au moins un premier objet soufflé retenu par au moins une première canne de soufflage (13),
- on transfère la première pince (11) dans une première direction de transfert (F3) oblique par rapport à la direction d'extrusion (F1) et perpendiculaire à la première direction de pincement (F2) le long d'un premier niveau (A),
- on insère la première canne de soufflage (13) sur une extrémité de la paraison (3) pour la souffler dans le premier moule (111) et former au moins un deuxième objet soufflé (4b), la feuille (5) étant intégrée au deuxième objet soufflé (4b),
- on ouvre le premier moule (111) dans la première direction de pincement (F2) et retenant le deuxième objet (4b) sur la première canne de soufflage (13) et on libère le premier objet soufflé (4a) sur un premier système d'évacuation (15),
le procédé étant **caractérisé en ce que**, pendant l'étape d'extrusion de la paraison (3), lorsque le premier moule (111) est ouvert, on transfère par la première canne de soufflage (13) le premier objet soufflé (4a) du premier niveau (A) vers un deuxième niveau (B) décalé par rapport au premier dans la direction d'extrusion (F1), on place la feuille (5) dans l'empreinte du premier moule (111) par des premiers moyens d'insertion (14), puis on transfère la première pince (11) dans la première direction de transfert (F3) pour placer le premier moule (111) autour de la paraison (3), et **en ce que** la première pince (11) reprend le premier objet soufflé (4a) au deuxième niveau (B) lors de l'étape de fermeture de la première pince (11) pour le transférer sur le premier système d'évacuation (15).

2. Procédé selon la revendication 1, selon lequel :
- dans un deuxième moule (211) ouvert, manoeuvré par une deuxième pince (21), on transfère par au moins une deuxième canne de soufflage (23) au moins un troisième objet soufflé (4c) du premier niveau (A) vers le deuxième niveau (B),
- on place au moins une deuxième feuille (5) dans au moins une empreinte du deuxième moule (211) par des deuxièmes moyens d'insertion (24),
- on transfère la deuxième pince (21) dans la deuxième direction de transfert (F5) pour placer le deuxième moule (211) autour de la paraison (3) lorsque la première pince (11) est retirée, et
- on ferme le deuxième moule (211) autour de la paraison (3) selon une deuxième direction de pincement (F4) perpendiculaire à la direction d'extrusion (F1), et on reprend par la deuxième pince (21) le troisième objet soufflé (4c) retenu par la deuxième canne de soufflage (23) au deuxième niveau (B),
- on transfère la deuxième pince (21) dans une deuxième direction de transfert (F5) oblique par rapport à la direction d'extrusion (F1) et perpendiculaire à la deuxième direction de pincement (F4),
- on insère la deuxième canne de soufflage (23) sur une extrémité de la paraison (3) pour la souffler dans le deuxième moule (211) et former au moins un quatrième objet soufflé (4d), la feuille (5) étant intégrée au quatrième objet soufflé (4d),
- on ouvre le deuxième moule (211) dans la deuxième direction de pincement (F4) en retenant le quatrième objet soufflé (4d) sur la deuxième canne de soufflage (23) et on libère le troisième objet soufflé (4c) sur un deuxième système d'évacuation 25.

3. Procédé selon l'une des revendications précédente, selon lequel la première ou la deuxième direction de transfert (F5) est perpendiculaire à la direction d'extrusion (F1).

4. Procédé selon la revendication 3, selon lequel la première et la deuxième direction de transfert (F5) sont parallèles.

5. Procédé selon l'une des revendications précédente, selon lequel on sectionne transversalement la paraison (3) lors de la fermeture du moule.

6. Robot pour machine d'extrusion-soufflage comportant :
- une première pince (11) comportant un premier moule (111) pour fermer le premier moule (111) autour d'au moins une paraison (3) extrudée par une tête (1) d'extrusion dans une direction d'extrusion (F1), le premier moule (111) comportant des coquilles (1111) avec des empreintes (1112), les coquilles (1111) étant mobiles selon une première direction de pincement (F2) perpendiculaire à la direction d'extrusion (F1), la première pince (11) comportant en outre des premiers moyens de préhension (112) pour reprendre au moins un premier objet soufflé (4a) retenu par au moins une première canne de soufflage (13),
- des premiers moyens d'insertion (14) pour insérer au moins une feuille (5) à la surface d'au moins l'une des empreintes (1112),
- des premiers moyens de transfert pour transférer la première pince (11) dans une première direction de transfert (F3) oblique par rapport à la direction d'extrusion (F1) et perpendiculaire à la première direction de pincement (F2) le long d'un premier niveau (A),
- la première canne de soufflage (13) étant apte à être insérée sur une extrémité de la paraison (3) pour la souffler dans le premier moule (111) et former au moins un deuxième objet soufflé (4b), la feuille (5) étant intégrée au deuxième objet soufflé (4a), et apte à retenir le deuxième objet sur la première canne de soufflage (13) lors de l'ouverture du premier moule (111) par la première pince (11),
- un premier système d'évacuation (15) disposé pour recevoir le premier objet soufflé (4a) par les premiers moyens de préhension (112) lors de l'ouverture de la première pince (11),
le robot (2, 2') étant **caractérisé en ce que** la première canne de soufflage (13) est agencée pour transférer le premier objet soufflé (4a) du premier niveau (A) vers un deuxième niveau (B) décalé par rapport au premier dans la direction d'extrusion (F1) de manière à sortir le premier objet soufflé (4a) du premier moule (111), **en ce que** les premiers moyens d'insertion (14) sont agencés pour insérer la feuille (5) en regard de la première canne de soufflage (13), **en ce que** les premiers moyens de préhension (112) sont agencés pour reprendre le premier objet soufflé (4a) au deuxième niveau (B) lors de la fermeture de la première pince (11) pour le transférer sur le premier système d'évacuation (15), et **en ce que** le robot (2, 2') est piloté pour mettre en oeuvre le procédé selon l'une des revendications précédentes.

7. Robot selon la revendication 6, **caractérisée en ce qu'**il comporte en outre :
- une deuxième pince (21) comportant un deuxième moule (211) pour fermer le deuxième moule (211) autour de la paraison (3) selon une deuxième direction de pincement (F4) perpendiculaire à la direction d'extrusion (F1), le deuxième moule (211) comportant des coquilles (1111) avec des empreintes (1112), et des deuxièmes moyens de préhension (212) pour reprendre au moins un troisième objet soufflé (4c) retenu par au moins une deuxième canne de soufflage (23),
- des deuxièmes moyens d'insertion (24) pour insérer au moins une feuille (5) à la surface d'au moins l'une des empreintes (1112) du deuxième moule (211),
- des deuxièmes moyens de transfert (21) pour transférer la deuxième pince (21) dans une deuxième direction de transfert (F5) oblique par rapport à la direction d'extrusion (F1) et perpendiculaire à la deuxième direction de pincement (F4) le long du premier niveau (A),
- la deuxième canne de soufflage (23) étant apte à être insérée sur une extrémité de la paraison (3) pour la souffler dans le deuxième moule (211) et former au moins un quatrième objet soufflé, la feuille (5) étant intégrée au quatrième objet soufflé, la deuxième canne de soufflage (23) étant apte à retenir le quatrième objet sur la deuxième canne de soufflage (23) lors de l'ouverture du deuxième moule (211) par la deuxième pince (21), et agencée pour transférer le quatrième objet soufflé du premier niveau (A) vers le deuxième niveau (B),
- un deuxième système d'évacuation (25) disposé pour recevoir le troisième objet soufflé (4c) par les deuxièmes moyens de préhension (212) lors de l'ouverture de la deuxième pince (21),
les deuxièmes moyens de préhension (212) étant agencés pour reprendre le troisième objet soufflé (4c) au deuxième niveau (B) lors de la fermeture de la deuxième pince (21) pour le transférer sur le deuxième système d'évacuation (25), le robot (2') étant piloté pour mettre en oeuvre le procédé selon l'une des revendications 2 à 5.

## Patentansprüche

1. Verfahren zum Extrusionsblasformen, bei dem:
- man mindestens einen Rohling (3) in eine Extrusionsrichtung (F1) extrudiert,
- man eine erste Zange (11), die eine erste Form (111) umfasst, um den Rohling (3) in eine erste Quetschrichtung (F2) senkrecht zur Extrusionsrichtung (F1) schließt, wobei mindestens ein Formnest der ersten Form (111) mindestens eine Folie (5) enthält, und man durch die erste Zange (11) mindestens einen ersten blasgeformten Gegenstand entnimmt, der durch mindestens ein Blasformrohr (13) zurückgehalten wird,
- man die erste Zange (11) in eine erste Überstellungsrichtung (F3) überstellt, die im Verhältnis zur Extrusionsrichtung (F1) schräg ist, und senkrecht zur ersten Quetschrichtung (F2) entlang einer ersten Ebene (A),
- man das erste Blasformrohr (13) an einem Ende des Rohlings (3) einführt, um ihn in einer ersten Form (111) blaszuformen und um mindestens einen zweiten blasgeformten Gegenstand (4b) zu bilden, wobei die Folie (5) in den zweiten blasgeformten Gegenstand (4b) integriert wird,
- man die erste Form (111) in die erste Quetschrichtung (F2) öffnet und man unter Rückhalten des zweiten Gegenstandes (4b) auf dem ersten Blasformrohr (13) den ersten blasgeformten Gegenstand (4a) auf ein erstes Ausbringungssystem (15) freigibt,
wobei das Verfahren **dadurch gekennzeichnet ist, dass** man während des Extrusionsschrittes des Rohlings (3), wenn die erste Form (111) offen ist, den ersten geblasenen Gegenstand (4a) durch das erste Blasformrohr (13) von der ersten Ebene zu einer zweiten Ebene (B) überstellt, die von der ersten in die Extrusionsrichtung (F1) versetzt ist, man die Folie (5) durch die ersten Einführmittel (14) in dem Formnest der ersten Form (111) platziert, man danach die erste Zange (11) in einer erste Überstellungsrichtung (F3) überstellt, um die erste Form (111) um den Rohling (3) zu platzieren, und dadurch, dass die erste Zange (11) den ersten blasgeformten Gegenstand (4a) beim Schritt des Schließens der ersten Zange (11) auf der zweiten Ebene (B) übernimmt, um ihn auf ein erstes Ausbringungssystem (15) zu überstellen.

2. Verfahren nach Anspruch 1, wobei
- man in einer zweiten offenen Form (211), die durch eine zweite Zange (21) manövriert wird, durch mindestens ein zweites Blasformrohr (23) mindestens einen dritten blasgeformten Gegenstand (4c) von der ersten Ebene (A) zur zweiten Ebene (B) überstellt,
- man mindestens eine zweite Folie (5) durch zweite Einführmittel (24) in mindestens ein Formnest der zweiten Form (211) einführt,
- man die zweite Zange (21) in die zweite Überstellungsrichtung (F5) überstellt, um die zweite Form (211) um den Rohling (3) zu platzieren, wenn die erste Zange (11) zurückgezogen ist, und
- man die zweite Form (211) in eine zweite Quetschrichtung (F4) senkrecht zur Extrusionsrichtung (F1) um den Rohling (3) schließt, und man durch die zweite Zange (21) den dritten blasgeformten Gegenstand (4c) entnimmt, der durch das zweite Blasformrohr (23) auf der zweiten Ebene (B) zurückgehalten wird,
- man die zweite Zange (21) in eine zweite Überstellungsrichtung (F5) schräg im Verhältnis zur Extrusionsrichtung (F1) und senkrecht zur zweiten Quetschrichtung (F4) überstellt,
- man das zweite Blasformrohr (23) an einem Ende des Rohlings (3) einführt, um ihn in der zweiten Blasform (211) blaszuformen und mindesten einen vierten blasgeformten Gegenstand (4d) zu bilden, wobei die Folie (5) in den vierten blasgeformten Gegenstand (4d) integriert wird,
- man die zweite Form (211) in die zweite Quetschrichtung (F4) öffnet, indem man den vierten blasgeformten Gegenstand (4d) an dem zweiten Blasformrohr (23) zurückhält und man den dritten blasgeformten Gegenstand (4c) auf ein zweites Ausbringungssystem (25) freigibt.

3. Verfahren nach einem der vorstehenden Ansprüche, wobei die erste oder die zweite Überstellungsrichtung (F5) senkrecht zur Extrusionsrichtung (F1) ist.

4. Verfahren nach Anspruch 3, wobei die erste oder die zweite Überstellungsrichtung (F5) parallel sind.

5. Verfahren nach einem der vorstehenden Ansprüche, wobei man den Rohling (3) beim Schließen der Form querlaufend abtrennnt.

6. Roboter für eine Maschine zum Extrusionsblasformen, umfassend:
- eine erste Zange (11), die eine erste Form (111) umfasst, um die erste Form (111) um mindestens einen Rohling (3) herum zu schließen, der von einem Extrusionskopf (1) in eine Extrusionsrichtung (F1) extrudiert wurde, wobei die erste Form (111) Kokillen (1111) mit Formnestern (1112) umfasst, wobei die Kokillen (1111) in eine erste Quetschrichtung (F2) senkrecht zur Extrusionsrichtung (F1) beweglich sind, wobei die erste Zange (11) weiter erste Greifmittel (112) umfasst, um mindestens einen ersten blasgeformten Gegenstand (4a) zu übernehmen, der durch mindestens ein erstes Blasformrohr (13) zurückgehalten wird,
- erste Einführmittel (14) zum Einführen mindestens einer Folie (5) an der Oberfläche mindestens eines der Formnester (1112),
- erste Überstellungsmittel zum Überstellen der ersten Zange (11) in eine erste Überstellungsrichtung (F3) schräg im Verhältnis zur Extrusionsrichtung (F1) und senkrecht zur ersten Quetschrichtung (F2) entlang einer ersten Ebene (A),
- wobei das erste Blasformrohr (13) imstande ist, an einem Ende des Rohlings (3) eingeführt zu werden, um ihn in der ersten Form (111) blaszuformen, und mindestens einen zweiten blasgeformten Gegenstand (4b) zu bilden, wobei die Folie (5) in den zweiten blasgeformten Gegenstand (4a) integriert wird und imstande ist, den zweiten Gegenstand beim Öffnen der ersten Form (111) durch die erste Zange (11) auf dem ersten Blasformrohr (13) zurückzuhalten,
- ein erstes Ausbringungssystem (15), das angeordnet ist, um den ersten blasgeformten Gegenstand (4a) durch erste Greifmittel (112) beim Öffnen der ersten Zange (11) aufzunehmen,
wobei der Roboter (2, 2') **dadurch gekennzeichnet ist, dass** das erste Blasformrohr (13) angeordnet ist, um den ersten blasgeformten Gegenstand (4a) von der ersten Ebene (A) auf die zweite Ebene (B) zu überstellen, die im Verhältnis zur ersten so in die Extrusionsrichtung (F1) versetzt ist, um den ersten blasgeformten Gegenstand (4a) aus der ersten Form (111) auszubringen, dadurch, dass die ersten Einführungsmittel (14) angeordnet sind, um die Folie (5) gegenüber dem ersten Blasformrohr (13) einzuführen, dadurch, dass die ersten Greifmittel (112) angeordnet sind, um den ersten blasgeformten Gegenstand (4a) auf der zweiten Ebene (B) beim Schließen der ersten Zange (11) zu übernehmen, um ihn auf das erste Ausbringungssystem (15) zu überstellen, und dadurch, dass der Roboter (2, 2') gesteuert wird, um das Verfahren nach einem der vorstehenden Ansprüche umzusetzen.

7. Roboter nach Anspruch 6, **dadurch gekennzeichnet, dass** er weiter umfasst:
- eine zweite Zange (21), die eine zweite Form (211) umfasst, um die zweite Form (211) um den Rohling (3) herum in eine zweite Quetschrichtung (F4) senkrecht zur Extrusionsrichtung (F1) zu schließen, wobei die zweite Form (211) Kokillen (1111) mit Formnestern (1112) umfasst, und zweite Greifmittel (212), um mindestens einen dritten blasgeformten Gegenstand (4c) zu übernehmen, der durch mindestens ein zweites Blasformrohr (23) zurückgehalten wird,
- zweite Einführmittel (24) zum Einführen mindestens einer Folie (5) an der Oberfläche mindestens eines der Formnester (1112) der zweiten Form (211),
- zweite Überstellungsmittel (21) zum Überstellen der zweiten Zange (21) in eine zweite Überstellungsrichtung (F5) schräg im Verhältnis zur Extrusionsrichtung (F1) und senkrecht zur zweiten Quetschrichtung (F4) entlang der ersten Ebene (A),
- wobei das zweite Blasformrohr (23) imstande ist, an einem Ende des Rohlings (3) eingeführt zu werden, um ihn in der zweiten Form (211) blaszuformen, und mindestens einen vierten blasgeformten Gegenstand zu bilden, wobei die Folie (5) in den vierten blasgeformten Gegenstand integriert wird, wobei das zweite Blasformrohr (23) imstande ist, den vierten Gegenstand beim Öffnen der zweiten Form (211) durch die zweite Zange (21) auf dem zweiten Blasformrohr (23) zurückzuhalten und angeordnet ist, um den vierten blasgeformten Gegenstand von der ersten Ebene (A) auf die zweite Ebene (B) zu überstellen,
- ein zweites Ausbringungssystem (25), das angeordnet ist, um den dritten blasgeformten Gegenstand (4c) durch zweite Greifmittel (212) beim Öffnen der zweiten Zange (21) aufzunehmen,
wobei die zweiten Greifmittel (212) angeordnet sind, um den dritten blasgeformten Gegenstand (4c) auf der zweiten Ebene (B) beim Schließen der zweiten Zange (21) zu übernehmen, um ihn auf das zweite Ausbringungssystem (25) zu überstellen, wobei der Roboter (2') gesteuert wird, um das Verfahren nach einem der Ansprüche 2 bis 5 umzusetzen.

## Claims

1. Extrusion-blow-moulding method according to which:
- at least one parison (3) is extruded in a direction of extrusion (F1),
- a first clamp (11) is closed comprising a first mould (111) around the parison (3) in a first direction of clamping (F2) perpendicular to the direction of extrusion (F1), at least one cavity of the first mould (111) containing at least one sheet (5), and at least one first blow-moulded object is picked up again by the first clamp (11) held by at least one first blow-moulding pipe (13),
- the first clamp (11) is transferred in a first direction of transfer (F3) that is slanted with respect to the direction of extrusion (F1) and perpendicular to the first direction of clamping (F2) along a first level (A),
- the first blow-moulding pipe (13) is inserted onto an end of the parison (3) in order to blow-mould it in the mould (111) and form at least one second blow-moulded object (4b), the sheet (5) being integrated into the first blow-moulded object (4b),
- the first mould (111) is opened in the first direction of clamping (F2) and holding the second object (4b) on the first blow-moulding pipe (13) and the first blow-moulded object (4a) is released on a first discharge system (15),
the method being **characterised in that**, during the step of extrusion of the parison (3), when the first mould (111) is open, the first blow-moulded object (4a) is transferred by the first blow-moulding pipe (13) from the first level (A) to a second level (B) offset with respect to the first in the direction of extrusion (F1), the sheet (5) is placed in the cavity of the first mould (111) by first means of insertion (14), then the first clamp (11) is transferred in the first direction of transfer (F3) in order to place the first mould (111) around the parison (3), and **in that** the first clamp (11) picks up again the first blow-moulded object (4a) at the second level (B) during the step of closing of the first clamp (11) in order to transfer it on the first discharge system (15).

2. Method according to claim 1, according to which:
- in a second open mould (211), manoeuvred by a second clamp (21), at least one third blow-moulded object (4c) is transferred by at least one second blow-moulding pipe (23) from the first level (A) to the second level (B),
- at least one second sheet (5) is placed in at least one cavity of the second mould (211) by second means of insertion (24),
- the second clamp (21) is transferred in the second direction of transfer (F5) in order to place the second mould (211) around the parison (3) when the first clamp (11) is removed, and
- the second mould (211) is closed around the parison (3) in a second direction of clamping (F4) perpendicular to the direction of extrusion (F1), and the third blow-moulded object (4c) held by the second blow-moulding pipe (23) is picked up again by the second clamp (21) at the second level (B),
- the second clamp (21) is transferred in a second direction of transfer (F5) that is slanted with respect to the direction of extrusion (F1) and perpendicular to the second direction of clamping (F4),
- the second blow-moulding pipe (23) is inserted onto an end of the parison (3) in order to blow-mould it in the second mould (211) and form at least one fourth blow-moulded object (4d), with the sheet (5) being integrated into the fourth blow-moulded object (4d),
- the second mould (211) is opened in the second direction of clamping (F4) by holding the fourth blow-moulded object (4d) on the second blow-moulding pipe (23) and the third blow-moulded object (4c) is released on a second discharge system 25.

3. Method according to one of the preceding claims, according to which the first or the second direction of transfer (F5) is perpendicular to the direction of extrusion (F1).

4. Method according to claim 3, according to which the first and the second direction of transfer (F5) are parallel.

5. Method according to one of the preceding claims, according to which the parison (3) is sectioned transversally during the closing of the mould.

6. Robot for extrusion-blow-moulding machine comprising:
- a first clamp (11) comprising a first mould (111) for closing the first mould (111) around at least one parison (3) extruded by an extrusion head (1) in a direction of extrusion (F1), with the first mould (111) comprising shells (1111) with cavities (1112), with the shells (1111) being mobile in a first direction of clamping (F2) perpendicular to the direction of extrusion (F1), the first clamp (11) further comprising first means of gripping (112) in order to pick up again at least one first blow-moulded object (4a) held by at least one first blow-moulding pipe (13),
- first means of insertion (14) in order to insert at least one sheet (5) at the surface of at least one of the cavities (1112),
- first means of transferring in order to transfer the first clamp (11) in a first direction of transfer (F3) that is slanted with respect to the direction of extrusion (F1) and perpendicular to the first direction of clamping (F2) along a first level (A),
- the first blow-moulding pipe (13) being able to be inserted on an end of the parison (3) in order to blow-mould it in the mould (111) and form at least one second blow-moulded object (4b), the sheet (5) being integrated into the first blow-moulded object (4a), and able to hold the second object on the first blow-moulding pipe (13) during the opening of the first mould (111) by the first clamp (11),
- a first discharge system (15) arranged to receive the first blow-moulded object (4a) by the first means of gripping (112) during the opening of the first clamp (11),
with the robot (2, 2') being **characterised in that** the first blow-moulding pipe (13) is arranged in order to transfer the first blow-moulded object (4a) from the first level (A) to a second level (B) offset with respect to the first in the direction of extrusion (F1) in such a way as to remove the first blow-moulded object (4a) from the first mould (111), **in that** the first means of insertion (14) are arranged to insert the sheet (5) facing the first blow-moulding pipe (13), **in that** the first means of gripping (112) are arranged in order to pick up again the first blow-moulded object (4a) at the second level (B) during the closing of the first clamp (11) in order to transfer it on the first discharge system (15), and **in that** the robot (2, 2') is controlled to implement the method according to one of the preceding claims.

7. Robot according to claim 6, **characterised in that** it further comprises:
- a second clamp (21) comprising a second mould (211) in order to close the second mould (211) around the parison (3) in a second direction of clamping (F4) perpendicular to the direction of extrusion (F1), the second mould (211) comprising shells (1111) with cavities (1112), and second means of gripping (212) in order to pick up again at least one third blow-moulded object (4c) held by at least one second blow-moulding pipe (23),
- second means of insertion (24) in order to insert at least one sheet (5) at the surface of at least one of the cavities (1112) of the second mould (211),
- second means of transferring (21) for transferring the second clamp (21) in a second direction of transfer (F5) that is slanted with respect to the direction of extrusion (F1) and perpendicular to the second direction of clamping (F4) along the first level (A),
- the second blow-moulding pipe (23) being able to be inserted on an end of the parison (3) in order to blow-mould it in the second mould (211) and form at least one fourth blow-moulded object, with the sheet (5) being integrated into the fourth blow-moulded object, the second blow-moulding pipe (23) being able to hold the fourth object on the second blow-moulding pipe (23) during the opening of the second mould (211) by the second clamp (21), and arranged in order to transfer the fourth blow-moulded object from the first level (A) to the second level (B),
- a second discharge system (25) arranged to receive the third blow-moulded object (4c) by the second means of gripping (212) during the opening of the second clamp (21),
the second means of gripping (212) being arranged in order to pick up again the third blow-moulded object (4c) at the second level (B) during the closing of the second clamp (21) in order to transfer it onto the second discharge system (25), with the robot (2') being controlled to implement the method according to one of claims 2 to 5.
